# NEUE EUROPÄISCHE PATENTSCHRIFT

(11) **EP 1 132 263 B2**
(45) Veröffentlichungstag und Bekanntmachung des Hinweises auf die Entscheidung über den Einspruch: **26.04.2006**
(45) Hinweis auf die Patenterteilung: 07.05.2003
(21) Anmeldenummer: 01102763.8
(22) Anmeldetag: 08.02.2001
(51) Int. Cl.: B60R 21/34

(54) **Kotflügelanordnung für ein Kraftfahrzeug**
Wheel guard assembly for a vehicle
Dispositif de garde-boue pour un véhicule automobile

(30) Priorität: 29.02.2000 DE 10009363
(43) Veröffentlichungstag der Anmeldung: 12.09.2001
(73) Patentinhaber: Volkswagen Aktiengesellschaft, 38436 Wolfsburg (DE)
(72) Erfinder: Welsch, Frank, Dr., 38179 Schwülper (DE); Gödecke, Ralf, 29386 Hankensbüttel (DE)

(56) Entgegenhaltungen:
- FR-A- 2 773 349
- JP-A- 7 285 461
- PATENT ABSTRACTS OF JAPAN vol. 1999, no. 12, 29. Oktober 1999 (1999-10-29) & JP 11 180350 A (TOYOTA MOTOR CORP), 6. Juli 1999 (1999-07-06)
- PATENT ABSTRACTS OF JAPAN vol. 2000, no. 02, 29. Februar 2000 (2000-02-29) & JP 11 321717 A (HONDA MOTOR CO LTD), 24. November 1999 (1999-11-24)
- PATENT ABSTRACTS OF JAPAN vol. 2000, no. 02, 29. Februar 2000 (2000-02-29) & JP 11 321718 A (HONDA MOTOR CO LTD), 24. November 1999 (1999-11-24)

## Beschreibung

Die Erfindung bezieht sich auf eine Kotflügelanordnung für ein Kraftfahrzeug und deren unfallsichere Ausgestaltung im Hinblick auf einen Zusammenstoß des Kraftfahrzeuges mit einer ungeschützten Person, beispielsweise einem Fußgänger, um die Verletzungsgefahr für die Person zu vermindern.

Bei einem Zusammenprall mit einem Fußgänger wird dieser in einer ersten Phase in der Regel durch die Stoßstange des Fahrzeuges erfaßt und in einer zweiten Phase auf die Fronthaube des Fahrzeuges geschleudert, wobei der Aufprall dann zuerst mit dem Kopf oder dem Oberkörper erfolgt. Der Aufprall auf die breitflächige Fronthaube ist hierbei weniger kritisch. Die größten Risiken für die Verletzungsgefahr resultieren vielmehr aus den verhältnismäßig starren Seitenkanten der Fronthaube sowie insbesondere den Oberkanten der Kotflügel im Bereich derTrennfuge zu der Fronthaube. Gerade die Oberkanten der Kotflügel weisen eine besonders hohe Steifigkeit auf, da der Kotflügel im Bereich der Oberkante nach innen umgebogen ist, um sich mit einem Befestigungsabschnitt gegen die Fahrzeugkarosserie abzustützen. Schon aus der umgebogenen Oberkante ergibt sich eine deutliche Steifigkeitszunahme, die durch einen zumeist im wesentlichen vertikal ausgebildeten Stützabschnitt zwischen der Oberkante und dem Fahrzeugaufbau weiter verstärkt wird. Tritt der Aufprall im Bereich der Oberkante auf, so ist die Verletzungsgefahr bzw. die Schwere der Verletzungen besonders hoch.

Es wird daher versucht, die strukturelle Steifigkeit der Oberkante zu vermindern. Dabei ist jedoch zu beachten, daß für die Kotflügel eine die Integrität des Fahrzeugaufbaus nicht gefährdende Festigkeit der Verbindung zu der Karosserie erhalten bleiben muß, die zudem eine vibrationsfreie Anbindung sicherstellt.

Im Stand der Technik sind hierzu bereits eine Vielzahl von Lösungen vorgeschlagen worden.

So ist es beispielsweise aus der DE 29 22 893 A1 bekannt, einzelne Fahrzeugpartien zur Verminderung der Verletzungsgefahr bei Personenunfällen energieabsorbierend auszubilden. In diesem Zusammenhang wird dort vorgeschlagen, eine Oberkante eines Kotflügels über ein Deformationselement in Form eines liegenden U-Profils gegen einen Fahrzeugaufbau abzustützen, wobei ein erster Schenkel mit der Oberkante und der zweite Schenkel mit dem Fahrzeugaufbau verbunden ist. Hierbei liegt der zweite Schenkel auf einem Rahmenabschnittdes Fahrzeugaufbaus auf. Das U-Profil weist mit seiner Profilinnenseite zur Fahrzeugmitte hin.

Bei einer weiteren, aus der DE 29 34 060 A1 bekannten Kotflügelanordnung, die ebenfalls ein liegendes U-Profil zur Abstützung der Oberkante gegen einen Fahrzeugaufbau verwendet, erfolgt die aufbauseitige Anbindung über einen sich im wesentlichen in Vertikalrichtung erstreckenden Abschnitt.

Weiterhin ist auch aus der DE 30 47 969 A1 bekannt, zwischen der Oberkante eines Kotflügels und dem Fahrzeugaufbau ein Deformationselement vorzusehen, das als ein sich von der Oberkante zunächst im wesentlichen senkrecht nach unten, d.h. in bezug auf die Fahrzeugkarosserie zum Fahrzeugboden erstrekkender Wandabschnitt des Kotflügels ausgebildet ist. An das Deformationselement schließen mehrere, voneinander beabstandete, profilierte Befestigungslappen an, über die die Anbindung an einen vertikalen Abschnitt des Fahrzeugaufbaus erfolgt.

Schließlich ist aus der JP 11180350 eine Kotflügelanordnung bekannt, bei der die Abstützung gegen einen Fahrzeuglängsträger über ein Deformationselement mit einem kastenartigen Profil vorgenommen ist. Das Deformationselement überragt hierbei den Längsträger nach außen, so daß bei einem Personenaufprall auf die Oberkante des Kotflügels der aufbauseitige Schenkel des Profils einknicken kann. Die FR 2 773 349 beschreibt eine gattungsbildende kotflügelanordnung.

Diese bekannten Kotflügelanordnungen weisen jedoch immer noch eine verhältnismäßig hohe Steifigkeit im Bereich der Oberkante des Kotflügels auf. In allen Fällen ist zwar ein energieabsorbierendes Deformationselement vorgesehen. Da jedoch stets der Kotflügel gegenüber dem Fahrzeugaufbau über das Deformationselement abgestützt ist, sind die Möglichkeiten einer weitergehenden, weicheren Ausgestaltung des Kotflügels im Bereich der Oberkante nahezu ausgeschöpft.

Im Interesse der Unfallsicherheit ist es jedoch wünschenswert, den Bereich der Oberkante eines Kotflügels möglichst noch weicherauszubilden, um bei Personenunfällen die Verletzungsgefahr weiter zu vermindern. Andererseits muß der Kotflügel eine ausreichende strukturelle Steifigkeit besitzen, um die Integrität der Fahrzeugaußenhaut im Betrieb zu wahren.

Überdies dienen die Kotflügel auch der Aufnahme von Crashenergie bei einem Zusammenstoß mit einem schweren Hindernis, so daß deren Schwächung eine Verschlechterung der Insassensicherheit bedeuten würde.

Vor diesem Hintergrund liegt der Erfindung die Aufgabe zugrunde, bei einem Personenaufprall eines Kraftfahrzeuges die Verletzungsgefahrbzw. die Schwere der Verletzungen für die verunfallte Person weiter zu vermindern.

Diese Aufgabe wird gelöst durch eine Kotflügelanordnung für ein Kraftfahrzeug, umfassend einen Kotflügel mit einer Oberkante, ein Verstärkungsteil, das entlang der Oberkante an der Innenseite des Kotflügels vorgesehen ist, wobei der Kotflügel entlang seiner Oberkante zusammen mit dem Verstärkungsteil ein Hohlprofil ausbildet und das Profil des Verstärkungsteils einen zu der gegenüberliegenden Außenwand des Kotflügels grob parallelen und von dieser beabstandeten Wandabschnitt aufweist, der über einen ersten Schenkel an der Oberkante und einen zweiten Schenkel an einem von der Oberkante beabstandete Außenwandabschnitt des Kotflügels abgestützt ist, und mindestens ein gegenüber dem zweiten Schenkel zuzätliches Verbindungsteil, über das der von der Oberkante beabstandete Außenwandabschnitt gegen einen Fahrzeugaufbau abstützbar ist.

Grundsätzlich wäre es denkbar, die Oberkante des Kotflügels an der Fuge zu der Fronthaube als einen einwandigen, frei auskragenden Blechabschnitt auszubilden. Bei einer vertikalen Belastung wäre dieser besonders weich. Ein solcher Blechabschnitt würde jedoch bei Schwingungsanregung zum Flattern neigen. Erfindungsgemäß ist daher der Bereich der Oberkante durch ein Hohlprofil gebildet, das einerseits eine gegenüber herkömmlichen Anordnungen größere Nachgiebigkeit erlaubt, jedoch im Hinblick auf das Auftreten möglicher Schwingungen der Kotflügelanordnung dieser die notwendige Steifigkeit verieiht. Aus der erhöhten Nachgiebigkeit dieses Bereiches ergeben sich bei einem Personenaufprall gegenüber herkömmlichen Kotflügelanordnungen geringere Verzögerungswerte, womit das Verletzungsrisiko verringert wird.

Die Anbindung des Kotflügels über das mindestens ein Verbindungsteil gewährleistet überdies die weitgehende Ausnutzung des Verformungspotentials des Kotflügels zur Aufnahme von Crashenergie im Hinblick auf die Insassensicherheit, die bei einer alleinigen Anbindung des Kotflügels über einen sehr nachgiebigen Wandabschnitt nicht mehr gegeben wäre, da der Wandabschnitt vorzeitig zerstört werden würde. Das sich im wesentlichen in Fahrzeuglängsrichtung erstreckende Hohlprofil wirkt sich vorteilhaft auf das Energieabsorptionsvermögen des Kotflügels aus.

Zudem läßt sich durch ein durchgehendes Hohlprofil eine gleichmäßige Abstützung des Kotflügels über das bzw. die Verbindungsteile gegen den Fahrzeugaufbau erreichen.

In einer vorteilhaften Ausgestaltung der Erfindung ist das Verstärkungsteil im Profil wannenförmig ausgebildet. Es kann somit besonders einfach als Blechformteil hergestellt werden.

Die Anordnung des Verstärkungsteils erfolgt bevorzugt solchermaßen, daß der von der Außenwand des Kotflügels beabstandete Wandabschnitt zwischen den Schenkeln In Fahrzeugquerrichtung von innen nach außen schräg nach unten verläuft.

Zur Verbesserung der Abstützung des Verstärkungsteils gegen die Außenwand des Kotflügels ist in einer vorteilhaften Ausgestaltung mindestens einer der Schenkel an seinem Ende zu einem Befestigungsflansch umgebogen, wobei der jeweilige Befestigungsflansch im wesentlichen parallel zu der Außenwandkontur des Kotflügels ausgebildet ist. Überdies ergibt sich hierdurch die Möglichkeit einer breitflächigen, von außen unsichtbaren Verbindung des Kotflügels mit dem Verstärkungsteil.

In diesem Zusammenhang ist es weiterhin vorteilhaft, wenn der von der Oberkante beabstandete zweite Schenkel in Normalenrichtung auf die Innenseite des Außenwandabschnittes des Kotflügels trifft. Damit ergibt sich eine wirkungsvolle Abstützung bei auf den Kotflügel einwirkenden Seitenkräften, beispielsweise wenn sich eine Person gegen den Kotflügel anlehnt. Bleibende Verformungen des Kotflügels werden in diesem Fall vermieden.

Prinzipiell kann der Kotflügel an der Oberkante mit dem ersten Schenkel verschweißt werden. Allerdings muß dann die Trennfuge möglichst in das Fahrzeug verlegt werden, so daß diese von außen nicht sichtbar ist. In einer weiteren, vorteilhaften Ausgestaltung der Erfindung ist der Kotflügel an der Oberkante um einen Randabschnitt des ersten Schenkels des Verstärkungsteils gefalzt. Damit bleibt die Formgebung der miteinander zu verbindenden Vorstücke einfach. Weiterhin ergibt sich im Bereich der Oberkante des Kotflügels eine verhältnismäßig dünnwandige Struktur, die ohne sich in Vertikalrichtung erstreckende, und aufgrund ihrer Verstärkungswirkung In diesem Bereich unerwünschte Wandabschnitte auskommt.

Die kotflügelseitige Anbindung des Verbindungsteils erfolgt bevorzugt über den zweiten Schenkel, so daß die Außenwand des Kotflügels von ihrer eigentlichen Abstützung gegen den Fahrzeugaufbau unbeeinträchtigt bleibt. Die Gefahr eines Abprägens des Endes des Verbindungsteils in dem Kotflügel wird vermieden. Neben einem einzigen Verbindungsteil können auch eine Vielzahl von separaten Verbindungsteilen verwendet werden.

Vorzugsweise ist der Profilboden des Verstärkungsteils im Bereich der Anbindung des Verbindungsteils weiter von der Außenwand beabstandet, als der Profilboden zwischen benachbarten Verbindungsteilen von der Außenwand beabstandet ist. Neben einer größeren Abstützfläche für das Verstärkungsteil resultiert hieraus weiterhin eine örtlich erhöhte Steifigkeit in den für die Krafteinleitung in den Kotflügel relevanten Wandbereichen.

Das Verstärkungsteil übernimmt im wesentlichen die Funktion, für eine ausreichende Stabilität des Bereiches um die Oberkante des Kotflügels zu sorgen. Andererseits soll eine hohe Nachgiebigkeit dieses Bereiches gewährleistet bleiben. Hierzu ist es besonders vorteilhaft, wenn das Verstärkungsteil eine kleinere Wanddicke aufweist, als der Kotflügel.

Hingegen ist es für die stabile Befestigung des Kotflügels zweckmäßig, wenn das bzw. die Verbindungsteile eine größere Wanddicke aufweisen als das Verstärkungsteil.

Vorzugsweise werden der Kotflügel, das Verstärkungsteil und das Verbindungsteil als separate Elemente ausgebildet, die dann in ihrer Form einfach bleiben. In einer alternativen Ausführungsvariante können jedoch das Verstärkungsteil und der Kotflügel auch einstückig miteinander ausgebildet werden.

Die Erfindung wird nachfolgend anhand eines in der Zeichnung dargestellten Ausführungsbeispiels näher erläutert. Die Zeichnung zeigt in
- Figur 1: ein Ausführungsbeispiel einer Kotflügelanordnung in räumlicher Darstellung,
- Figur 2: einen Schnitt durch die Kotflügelanordnung nach Figur 1 in Fahrzeugquerrichtung auf der Höhe eines Verbindungsteils, und in
- Figur 3: einen Schnitt durch die Kotflügelanordnung nach Figur2 in Fahrzeugquerrichtung auf der Höhe zwischen zwei Verbindungsteilen.

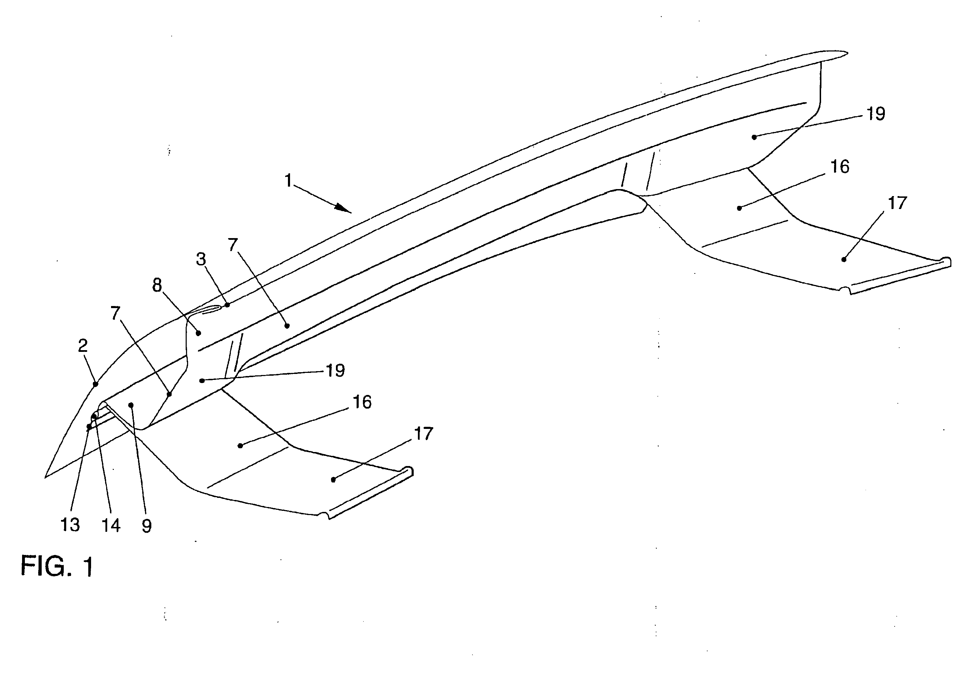

Das Ausführungsbeispiel in den Figuren 1 bis 3 zeigt eine Kotflügelanordnung 1 für ein Personenkraftfahrzeug. Die Kotflügelanordnung 1 umfaßt zunächst einen Kotflügel 2, der als Blechformteil ausgebildet ist. An dem Kotflügel 2 ist eine Oberkante 3 ausgebildet, die entlang des Seitenrands 4 einer Fronthaube 5 des Kraftfahrzeuges im wesentlichen in Fahrzeuglängsrichtung verläuft. Die Oberkante 3 des Kotflügels 2 und der Seitenrand 4 der Fronthaube 5 bilden eine Trennfuge, die bei herkömmlichen Fahrzeugkarosserien bei Personenunfällen aufgrund der dort größeren strukturellen Steifigkeit einen Bereich erhöhter Verletzungsgefahr darstellt, da insbesondere die Oberkante 3 über einen verhältnismäßig steifen Wandabschnitt gegen einen Rahmenabschnitt eines Fahrzeugaufbaus abgestützt ist.

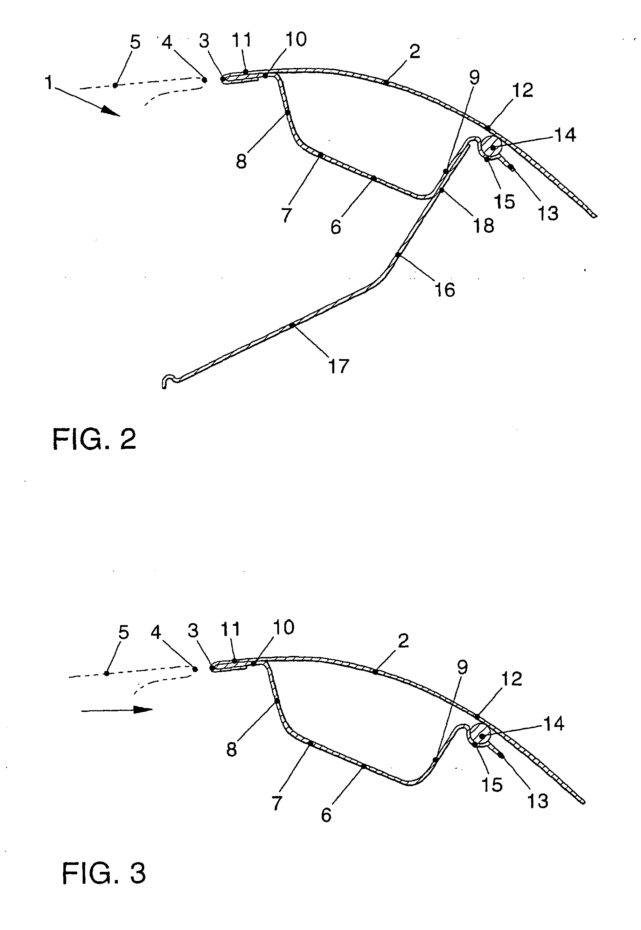

Weiterhin umfaßt die Kotflügelanordnung 1 ein Verstärkungsteil 6, das entlang der Oberkante 3 an der Innenseite des Kotflügels 2 angeordnet ist. Wie insbesondere den Figuren 2 und 3 entnommen werden kann, weist das Verstärkungsteil 6 ein wannenartiges Querschnittsprofil auf, das einen zu der gegenüberliegenden Außenwand des Kotflügels 2 grob parallelen und von dieser beabstandeten Wandabschnitt als Profilboden 7 sowie zwei an diesen jeweils seitlich anschließende Schenkel 8 und 9 ausbildet.

Der von der Außenwand des Kotflügels 2 beabstandete Wandabschnitt bzw. Profilboden 7 verläuft bei Betrachtung in Fahrzeugquerrichtung von innen nach außen und schräg nach unten.

Ein erster Schenkel 8 erstreckt sich dabei von dem Profilboden 7 zu der Innenwand des Kotflügels 2. Dabei ist das kotflügelseitige Ende des Schenkels 8 im wesentlichen in Fahrzeugquerrichtung entsprechend der Außenkontur des Kotflügels 2 umgebogen. Dieser umgebogene Wandabschnitt 10 erstreckt sich bis zu der Oberkante 3, wo er von einem Rand 11 des Kotflügels 2 umschlossen wird. Dazu ist der Rand 11 um den Wandabschnitt 10 herumgelegt und mit diesem verfalzt.

Der zweite Schenkel 9 verläuft im wesentlichen in Normalenrichtung auf die Außenwand des Kotflügels 2, das heißt genauer auf einen von der Oberkante 3 beabstandeten Außenwandabschnitt 12 des Kotflügels 2 zu, um sich innenseitig gegen diesen abzustützen.

An seinem außenwandseitigen Ende ist der zweite Schenkel 9 nach seiner Profilaußenseite umgebogen, um einen im wesentlichen parallel zu dem Außenwandabschnitt 12 verlaufenden Flanschabschnitt 13 auszubilden. Über diesen Flanschabschnitt 13 ist das Verstärkungsteil 6 fest mit der Innenwand des Außenwandabschnittes 12 verbunden. Da der Außenwandabschnitt 12 einen Teil der Außenhaut des Fahrzeuges darstellt, sind hier Verbindungstechniken erforderlich, welche die Außenseite des Außenwandabschnittes 12 nicht beeinträchtigen. Bei dem hier dargestellten Ausführungsbeispiel ist daher das Ende des Verstärkungsteils 6 an der Innenwand des Außenwandabschnittes 12 angeklebt. Hierzu ist zwischen dem Flanschabschnitt 13 und der Innenseite des Außenwandabschnittes 12 ein Stützkleber 14 vorgesehen. Dieser Stützkleber 14 besitzt im unverformten Zustand einen kreisförmigen Querschnitt und ist halbseitig in einer bogenförmigen Nut 15 an dem Flanschabschnitt 13 aufgenommen. Die Nut 15 erstreckt sich im wesentlichen in Fahrzeuglängsrichtung. Der Stützkleber 14 besteht beispielsweise aus einem Epoxidharz. Die Abstützung der Innenwand des Kotflügels 2 an dem Verstärkungsteil 6 erfolgt dabei vorzugsweise lediglich über den Stützkleber 14, so daß sich der Flanschabschnitt 13 und die Innenwand nicht direkt berühren.

Wie insbesondere Figur 1 entnommen werden kann, bildet das Verstärkungsteil 6 zusammen mit dem Kotflügel 2 im Bereich der Oberkante 3 des Kotflügels 2 ein sich im wesentlichen in Fahrzeuglängsrichtung erstreckendes Hohlprofil aus. Über dieses Hohlprofil erfolgt die Anbindung an einem hier nicht näher dargestellten Abschnitt eines Fahrzeugrahmens über mindestens ein Verbindungsteil 16. Dieses Verbindungsteil kann entlang der gesamten Länge des Hohlprofils vorgesehen werden. Bei dem hier dargestellten Ausführungsbeispiel werden jedoch zwei voneinander beabstandete Verbindungsteile 16 verwendet, die jeweils als in Fahrzeugquerrichtung langgestreckte Blechstreifen ausgebildet sind.

Jedes Verbindungsteil 16 ist mit einem Ende 17 an dem Fahrzeugrahmen befestigbar. Hierzu kann das Ende 17 mit dem Fahrzeugrahmen durch Schwei-ßen, Löten, Nieten, Falzen oder Kleben verbunden werden. Bevorzugt wird jedoch eine lösbare Verbindung, beispielsweise eine Schraubverbindung vorgesehen, die bei einer Beschädigung des Kotflügels 2 einen schnellen und einfachen Austausch desselben erlaubt.

Das andere Ende 18 des hierzu nach oben abgewinkelten Verbindungsteils 16 liegt gegen eine im wesentlichen flache Außenwand des zweiten Schenkels 9 an und ist mit dieser fest verbunden. Zur Verbindung können die vorgenannten Verbindungstechniken verwendet werden. Vorzugsweise wird jedoch das andere Ende 18 des Verbindungsteils 16 mit dem zweiten Schenkel 9 verschweißt. Wie aus Figur 1 weiter entnommen werden kann, ist der Profilboden 7 des Hohlprofils im Bereich 19 der Anbindungsstellen der Verbindungsteile 16 von der Innenseite des Kotflügels 2 stärker vorgewölbt. Damit ist der Profilboden 7 des Verstärkungsteils 6 im Bereich 19 der Anbindung des Verbindungsteils 16 weiter von der Außenwand des Kotflügels 2 beabstandet ist, als zwischen benachbarten Verbindungsteilen 16, woraus für die Aufhängung des Kotflügels 2 eine lokale Steifigkeitserhöhung resultiert.

Wie der Kotflügel 2 so sind auch das Verstärkungsteil 6 und das bzw. die Verbindungsteile 16 als Blechteile ausgebildet. Im Hinblick auf eine hohe Nachgiebigkeit weist das Verstärkungsteil 6 eine kleinere Steifigkeit, insbesondere eine kleinere Wanddicke auf als der Kotflügel 2. Die Wanddicke des Verstärkungsteils 6 liegt im Bereich von 50 bis 80 % der Wanddicke des Kotflügels 2. Das Verbindungsteil 16 ist hingegen dicker als das Verstärkungsteil 6 ausgebildet. Dabei kann die Wanddicke des Verstärkungsteils 16 kleiner sein als die Wanddicke des Kotflügels 2.

Durch die sehr nachgiebige Ausbildung des Bereiches der Oberkante 3 ergibt sich bei einem Personenaufprall gegenüber herkömmlichen Kotflügelanordnungen eine geringere Verzögerung, womit das Verletzungsrisiko vermindert wird. Bei einer stoßartigen Vertikalbelastung auf den oberen Bereich des Kotflügels 2 wird der Aufprall weich abgefangen. Da aus den Verbindungsteilen 16 eine gewisse Versteifungswirkung resultiert, werden die Verbindungsteile 16 bevorzugt dort angeordnet, wo mit einer geringeren Aufprallwahrscheinlichkeit zu rechnen ist.

### BEZUGSZEICHENLISTE

- 1: Kotflügelanordnung
- 2: Kotflügel
- 3: Oberkante
- 4: Seitenrand
- 5: Fronthaube
- 6: Verstärkungsteil
- 7: Profilboden
- 8: erster Schenkel
- 9: zweiter Schenkel
- 10: umgebogener Wandabschnitt
- 11: Rand des Kotflügels
- 12: Außenwandabschnitt
- 13: Flanschabschnitt
- 14: Stützkleber
- 15: Nut
- 16: Verbindungsteil
- 17: aufbauseitiges Ende des Verbindungsteils
- 18: kotflügelseitiges Ende des Verbindungsteils
- 19: Bereich der Anbindung des Verbindungsteils

## Patentansprüche

1. Kotflügelanordnung für ein Kraftfahrzeug,
umfassend einen Kotflügel (2) mit einer Oberkante (3),
ein Verstärkungsteil (6), das entlang der Oberkante (3) an einer Innenseite des Kotflügels (2) vorgesehen ist,
wobei der Kotflügel (2) entlang seiner Oberkante (3) zusammen mit dem Verstärkungsteil (6) ein Hohlprofil ausbildet,
und wobei das Profil des Verstärkungsteils (6) einen von der gegenüberliegenden Außenwand des Kotflügels (2) beabstandeten Wandabschnitt (7) aufweist,
der über einen ersten Schenkel (8) an der Oberkante (3) und über einen zweiten Schenkel (9) an einem von der Oberkante (3) beabstandeten Außenwandabschnitt (12) des Kotflügels (2) abgestützt ist,
wobei der Wandabschnitt (7) des Verstärkungsteils (6) grob parallel zu der gegenüberliegenden Außenwand des Kotflügels (2) verläuft **dadurch gekennzeichnet,**
**daß** die Kotflügelanordnung mindestens ein gegenüber dem zweiten Schenkel (9) zusätzliches Verbindungsteil (16) umfaßt, über das der von der Oberkante (3) beabstandete Außenwandabschnitt (12) gegen einen Fahrzeugaufbau abstützbar ist.

2. Kotflügelanordnung nach Anspruch 1, **dadurch gekennzeichnet, daß** das Verstärkungsteil (6) im Profil wannenförmig ausgebildet ist.

3. Kotflügelanordnung nach Anspruch 1 oder 2, **dadurch gekennzeichnet, daß** der von der Außenwand des Kotflügels (2) beabstandete Wandabschnitt (7) zwischen den Schenkeln (8, 9) in Fahrzeugquerrichtung von innen nach außen schräg nach unten verläuft.

4. Kotflügelanordnung nach einem der Ansprüche 1 bis 3, **dadurch gekennzeichnet, daß** mindestens einer der Schenkel (8, 9) an seinem Ende zu einem Befestigungsflansch (10,13) umgebogen ist, derart, daß der jeweilige Befestigungsflansch im wesentlichen parallel zu der Außenwandkontur des Kotflügels (2) verläuft.

5. Kotflügelanordnung nach einem der Ansprüche 1 bis 4, **dadurch gekennzeichnet, daß** der Kotflügel (2) an der Oberkante (3) um einen Randabschnitt (10) des ersten Schenkels (8) des Verstärkungsteils (6) gefalzt ist.

6. Kotflügelanordnung nach einem der Ansprüche 1 bis 4, **dadurch gekennzeichnet, daß** das Verstärkungsteil (6) einstückig mit dem Kotflügel (2) ausgebildet ist.

7. Kotflügelanordnung nach einem der Ansprüche 1 bis 6, **dadurch gekennzeichnet, daß** der von der Oberkante (3) beabstandete zweite Schenkel (9) in Normalenrichtung auf die Innenseite des Außenwandabschnittes (12) des Kotflügels (2) trifft.

8. Kotflügelanordnung nach einem der Ansprüche 1 bis 7. **dadurch gekennzeichnet, daß** mindestens ein Verbindungsteil (16) vorgesehen ist, über das der zweite Schenkel (9) gegenüber einem Fahrzeugaufbau abgestützt ist.

9. Kotflügelanordnung nach einem der Ansprüche 1 bis 8, **dadurch gekennzeichnet, daß** der von der Außenwand des Kotflügels (2) beabstandete Wandabschnitt (7) des Verstärkungsteils (6) im Bereich der Anbindung des Verbindungsteils (16) weiter von der Außenwand beabstandet ist, als der Wandabschnitt (7) zwischen benachbarten Verbindungsteilen (16) von der Außenwand beabstandet ist.

10. Kotflügelanordnung nach einem der Ansprüche 1 bis 9, **dadurch gekennzeichnet, daß** das Verstärkungsteil (6) eine kleinere Wanddicke aufweist als der Kotflügel (2).

11. Kotflügelanordnung nach einem der Ansprüche 1 bis 10, **dadurch gekennzeichnet, daß** das Verbindungsteil (16) eine größere Wanddicke aufweist als das Verstärkungsteil (6).

## Claims

1. Wheel guard assembly for a motor vehicle, comprising a wheel guard (2) with an upper edge (3), a reinforcing part (6), which is provided along the upper edge (3) on an inner side of the wheel guard (2), the wheel guard (2) together with the reinforcing part (6) forming a hollow profile along its upper edge (3) and the profile of the reinforcing part (6) having a wall portion (7) which is spaced apart from the opposite outer wall of the wheel guard (2) and is supported by means of a first leg (8) on the upper edge (3) and by means of a second leg (9) on an outer wall portion (12) of the wheel guard (2) at a distance from the upper edge (3), the wall portion (7) of the reinforcing part (6) running roughly parallel to the opposite outer wall of the wheel guard (2), **characterized in that** the wheel guard assembly comprises at least one connecting part (16), in addition to the second leg (9), by means of which part the outer wall portion (12) at a distance from the upper edge (3) can be supported against a superstructure of the vehicle.

2. Wheel guard assembly according to Claim 1, **characterized in that** the reinforcing part (6) is of a trough-shaped form in profile.

3. Wheel guard assembly according to Claim 1 or 2, **characterized in that** the wall portion (7) spaced apart from the outer wall of the wheel guard (2), between the legs (8, 9), runs obliquely downwards from the inside to the outside in the direction transverse to the vehicle.

4. Wheel guard assembly according to one of Claims 1 to 3, **characterized in that** at least one of the legs (8, 9) is bent around at its end to form a fastening flange (10, 13) in such a way that the respective fastening flange runs substantially parallel to the contour of the outer wall of the wheel guard (2).

5. Wheel guard assembly according to one of Claims 1 to 4, **characterized in that** the wheel guard (2) is folded at the upper edge (3) around an edge portion (10) of the first leg (8) of the reinforcing part (6).

6. Wheel guard assembly according to one of Claims 1 to 4, **characterized in that** the reinforcing part (6) is formed in one piece with the wheel guard (2).

7. Wheel guard assembly according to one of Claims 1 to 6, **characterized in that** the second leg (9), which is at a distance from the upper edge (3), perpendicularly meets the inner side of the outer wall portion (12) of the wheel guard (2).

8. Wheel guard assembly according to one of Claims 1 to 7, **characterized in that** at least one connecting part (16) is provided, by means of which the second leg (9) is supported with respect to a superstructure of the vehicle.

9. Wheel guard assembly according to one of Claims 1 to 8, **characterized in that** the wall portion (7), which is spaced apart from the outer wall of the wheel guard (2), of the reinforcing part (6) is spaced further apart from the outer wall in the region where the connecting part (16) joins on than the wall portion (7) between neighbouring connecting parts (16) is spaced apart from the outer wall.

10. Wheel guard assembly according to one of Claims 1 to 9, **characterized in that** the reinforcing part (6) has a smaller wall thickness than the wheel guard (2).

11. Wheel guard assembly according to one of Claims 1 to 10, **characterized in that** the connecting part (16) has a greater wall thickness than the reinforcing part (6).

## Revendications

1. Dispositif de garde-boue pour un véhicule automobile, comprenant un garde-boue (2) avec une arête supérieure (3), une pièce de renforcement (6), qui est prévue le long de l'arête supérieure (3) sur un côté intérieur du garde-boue (2), dans lequel le garde-boue (2) forme le long de son arête supérieure (3) un profil creux avec la pièce de renforcement (6) et dans lequel le profil de la pièce de renforcement (6) présente une partie de paroi (7) distante de la paroi extérieure opposée du garde-boue (2), qui prend appui par une première aile (8) sur l'arête supérieure (3) et par une seconde aile (9) sur une partie de paroi extérieure (12) du garde-boue (2) distante de l'arête supérieure (3), la partie de paroi (7) de la pièce de renforcement (6) s'étendant approximativement parallèlement à la paroi extérieure opposée du garde-boue (2), **caractérisé en ce que** le dispositif du garde-boue comprend au moins une pièce de liaison (16) en plus de la second aile (9), par laquelle la partie de paroi extérieure (12) distante de l'arête supérieure (3) peut être appuyée sur une structure du véhicule.

2. Dispositif de garde-boue suivant la revendication 1, **caractérisé en ce que** la pièce de renforcement (6) présente un profil en forme de cuvette.

3. Dispositif de garde-boue suivant la revendication 1 ou 2, **caractérisé en ce que** la partie de paroi (7) distante de la paroi extérieure du garde-boue (2) et située entre les ailes (8, 9) est orientée en oblique vers le bas de l'intérieur vers l'extérieur dans le sens transversal du véhicule.

4. Dispositif de garde-boue suivant l'une quelconque des revendications 1 à 3, **caractérisé en ce qu'**au moins une des ailes (8, 9) est recourbée à son extrémité en une bride de fixation (10, 13), de telle manière que chaque bride de fixation soit orientée sensiblement parallèlement au contour de la paroi extérieure du garde-boue (2).

5. Dispositif de garde-boue suivant l'une quelconque des revendications 1 à 4, **caractérisé en ce que** le garde-boue (2) est replié à l'arête supérieure (3) autour d'une partie de bord (10) de la première aile (8) de la pièce de renforcement (6).

6. Dispositif de garde-boue suivant l'une quelconque des revendications 1 à 4, **caractérisé en ce que** la pièce de renforcement (6) est formée d'un seul tenant avec le garde-boue (2).

7. Dispositif de garde-boue suivant l'une quelconque des revendications 1 à 6, **caractérisé en ce que** la seconde aile (9) distante de l'arête supérieure (3) arrive en direction normale sur le côté intérieur de la partie de paroi extérieure (12) du garde-boue (2).

8. Dispositif de garde-boue suivant l'une quelconque des revendications 1 à 7, **caractérisé en ce qu'**il est prévu au moins une pièce de liaison (16), par laquelle la seconde aile (9) prend appui sur une structure du véhicule.

9. Dispositif de garde-boue suivant l'une quelconque des revendications 1 à 8, **caractérisé en ce que** la partie de paroi (7) de la pièce de renforcement (6), distante de la paroi extérieure du garde-boue (2), est plus distante de la paroi extérieure dans la région de la jonction de la pièce de liaison (16) que la partie de paroi (7) n'est distante de la paroi extérieure entre des pièces de liaison (16) voisines.

10. Dispositif de garde-boue suivant l'une quelconque des revendications 1 à 9, **caractérisé en ce que** la pièce de renforcement (6) présente une épaisseur de paroi plus faible que le garde-boue (2).

11. Dispositif de garde-boue suivant l'une quelconque des revendications 1 à 10, **caractérisé en ce que** la pièce de liaison (16) présente une plus grande épaisseur de paroi que la pièce de renforcement (6).
